# EUROPÄISCHE PATENTSCHRIFT

(11) **EP 0 446 179 B1**
(45) Veröffentlichungstag und Bekanntmachung des Hinweises auf die Patenterteilung: **22.09.1993**
(21) Anmeldenummer: 91810141.1
(22) Anmeldetag: 04.03.1991
(51) Int. Cl.: F16L 37/56

(54) **Doppelrohrverbindung an Kunststoffrohren**
Double pipe connection for plastic pipes
Raccord pour tuyaux contigus fabriqués en matière plastique

(30) Priorität: 06.03.1990 CH 716/90
(43) Veröffentlichungstag der Anmeldung: 11.09.1991
(73) Patentinhaber: Geberit AG, CH-8645 Jona (CH); KERAMAG Keramische Werke Aktiengesellschaft, D-40878 Ratingen (DE)
(72) Erfinder: Egli,Anton, CH-8739 Rieden (CH)
(74) Vertreter: Groner, Manfred

(56) Entgegenhaltungen:
- FR-A- 1 523 311
- US-A- 3 583 710

## Beschreibung

Die Erfindung betrifft eine Verbindung von zwei Doppelrohren nach dem Oberbegriff des unabhängigen Patentanspruchs 1.

Eine Verbindung dieser Art ist durch die US-A-3,583,710 bekannt geworden. Bei dieser wird die Dichtungsmanschette mittels eines auf das äussere Rohr aufgerasteten Ringes fixiert. Dazu sind am äusseren Rohr und am Ring entsprechende zusammenwirkende Rastkanten erforderlich.

Weiter ist im Stand der Technik eine Verbindung bekannt, bei welcher die beiden Rohrenden Aussenflansche und Aussengewinde aufweisen und mit einer Ueberwurfmutter zusammengehalten sind. Diese Verbindung ist an einem Waschbecken bekannt, wobei das eine Rohr ein Ueberlaufrohr und das andere Rohr ein Anschlussstutzen am Ablaufrohr ist.

Der Erfindung liegt die Aufgabe zugrunde, eine Verbindung der genannten Gattung zu schaffen, die insbesondere im Spritzgussverfahren einfacher herzustellen und zu montieren ist und die im Verbindungsbereich eine einwandfreie Abdichtung zwischen den beiden Kanälen gewährleistet. Die Verbindung soll sich insbesondere für wasserführende Rohre an Sanitärapparaten eignen. Die Aufgabe wird durch die Erfindung gemäss Anspruch 1 gelöst.

Da bei der erfindungsgemässen Verbindung die Rohrenden keine Gewinde und keine Flansche aufweisen, sind die Rohre im Spritzgussverfahren wesentlich einfacher herstellbar. Die Rohrenden sind nicht an einen runden Querschnitt gebunden, weshalb diese in günstiger Anpassung an die Raumverhältnisse auch flach sein können. Zum Erstellen der Verbindung müssen lediglich die beiden Rohrenden zusammengeschoben werden, wobei die Dichtungsmanschette zwischen die beiden getrennten Kanäle eingreift.

Da die Rohrenden keine Flansche aufweisen, können sie beliebig abgelängt werden. Dies ist besonders bei Sanitärmontagen ausserordentlich vorteilhaft und vereinfacht auch die Lagerhaltung. Vorteilhafte Weiterbildungen ergeben sich aus den abhängigen Ansprüchen und der nachfolgenden Beschreibung. Es zeigen:
Fig. 1 eine Ansicht einer erfindungsgemässen Doppelrohrverbindung,
Fig. 2 ein Schnitt durch eine erfindungsgemässe Doppelrohrverbindung an einem Ablauf eines Waschbeckens,
Fig. 3 ein Schnitt entlang der Linie III-III in Fig. 2,
Fig. 4 ein Längsschnitt durch ein Ueberlaufrohr, und
Fig. 5 eine Ansicht des Ueberlaufrohres nach Fig. 4.

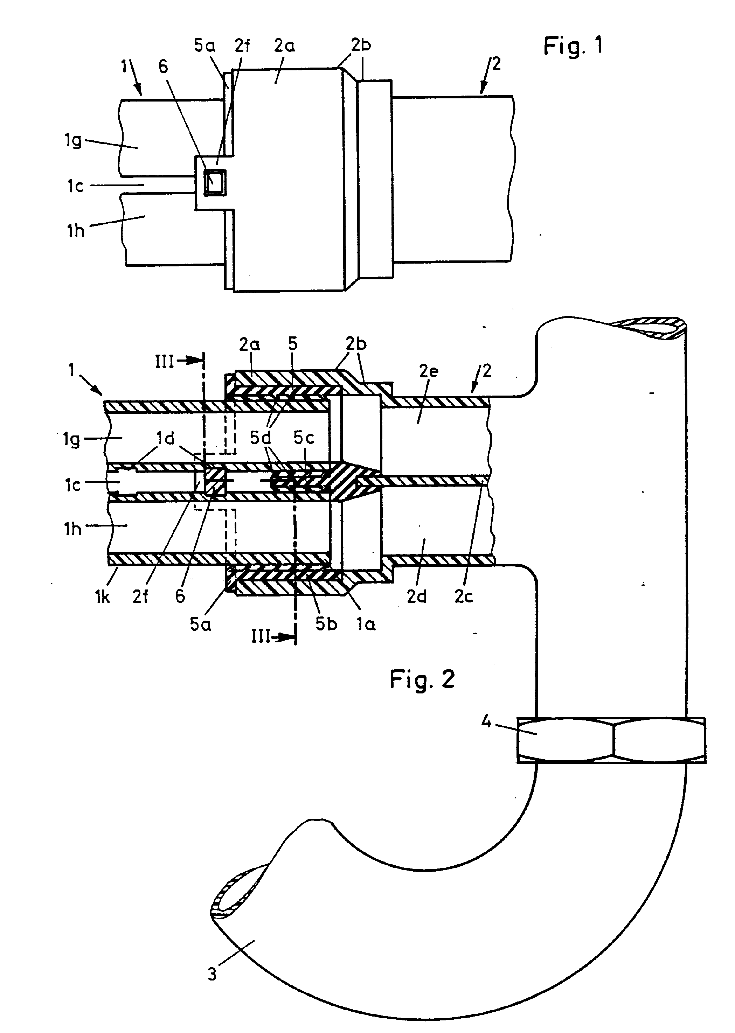

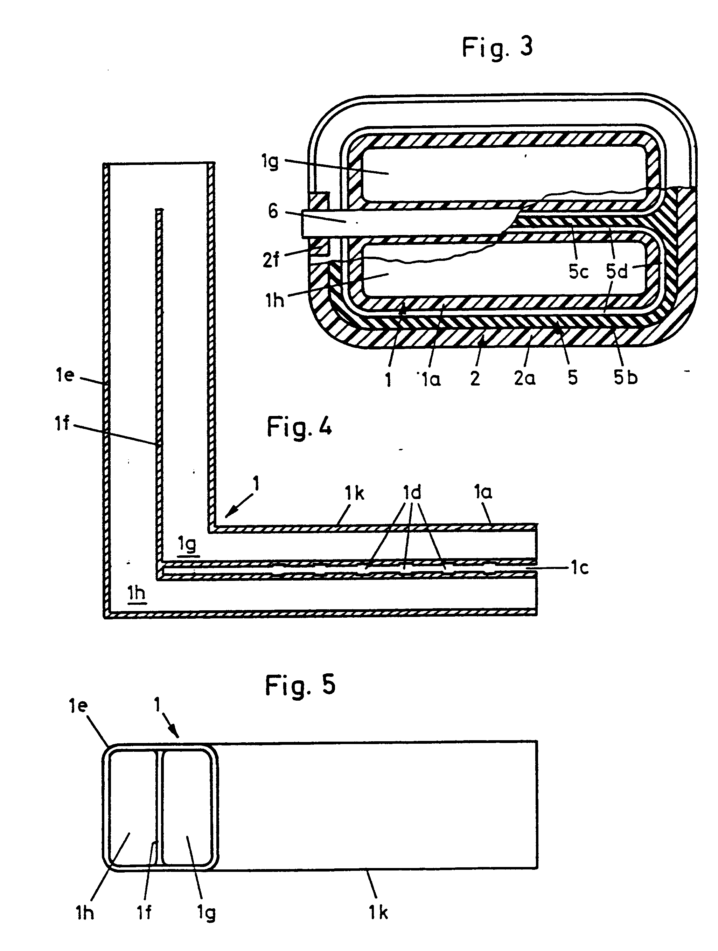

Das eine Rohr 1 der in den Fig. 1 und 2 gezeigten Verbindung ist ein unter einem hier nicht gezeigten Waschtisch angeordnetes Ueberlaufrohr, das zwei Kanäle 1g und 1h aufweist. Hierbei bildet der eine Kanal 1g den Steigkanal und der Kanal 1h den Rückkanal, der unterhalb eines hier nicht gezeigten Ventils in einen Siphonbogen 3 führt. Wie Fig. 4 zeigt, ist das Ueberlaufrohr 1 rechtwinklig abgewinkelt, wobei ein senkrecht ansteigender Teil 1e in üblicher Weise durch eine Trennwand 1f innen unterteilt ist. Beim anderen, horizontal verlaufenden Teil 1k sind die beiden Kanäle 1g und 1h durch einen Zwischenraum 1c voneinander getrennt.

Das Rohr 2 ist in diesem Ausführungsbeispiel ein Ablaufstutzen eines Ablaufrohres, welches unten mit einer Ueberwurfmutter 4 am Siphon 3 und oben mit einem hier nicht dargestellten Ablaufventil verbunden ist. Das Rohr 2 ist durch eine angeformte Innenwand 2c in zwei getrennte Kanäle 2d und 2e unterteilt. Wie die Fig. 1 und 2 zeigen, ist das freie Ende 2a des Rohres 2 über Stufen 2b innen und aussen so stufenweise erweitert, dass es in seinem Innenraum eine Dichtungsmanschette 5 sowie das Rohrende 1e aufnehmen kann.

Sind die beiden Rohre 1 und 2 wie in Fig. 2 gezeigt axial zusammengesteckt, so sind die Kanäle 2e und 1g sowie die Kanäle 2d und 1h im Bereich der Verbindung flüssigkeitsdicht gegeneinander abgedichtet. Die hierzu vorgesehene Dichtungsmanschette 5 besteht aus einem elastischem Material und ist bis zum Anschlag eines flanschartigen Randes 5a in das Ende 2e des Rohres 2 eingelegt. Eine umlaufende Wandung 5b liegt dichtend an der Innenseite des Rohrendes 2a an. An dieser Wandung 2b ist eine Wandung 5c angeformt, die einerseits in den Zwischenraum 1c eingreift und andererseits dichtend die Wandung 2c umgreift. An den Innenseiten der Wandungen 5b und 5c sind elastische Dichtlippen 5d angeformt, die unter elastischer Spannung dichtend an der Aussenseite des Rohrendes 1a anliegen. Diese Dichtlippen 5d sorgen ebenfalls für einen gewissen Reibschluss zwischen den beiden Rohren und kann auch Massab-weichungen an diesen Rohren aufnehmen.

Wie die Fig. 3 zeigt, sind die Rohrenden 1a und 2a sowie die Manschette 5 im Querschnitt rechteckig ausgebildet. Bei gleichem Durchflussquerschnitt kann deshalb die Höhe der Verbindung, verglichen mit einer im Querschnitt runden Doppelrohrverbindung, niedriger sein. Bei engen Raumverhältnissen, wie dies bei sanitären Apparaten häufig der Fall ist, ist eine solche freie Wahl des Querschnittes besonders vorteilhaft.

Um die beiden Rohre 1 und 2 in axialer Richtung zu fixieren, ist ein Riegel 6 vorgesehen, der in den Zwischenraum 1c eingeschoben ist und mit seinen Enden in diagonal gegenüberliegenden Laschen 2f des Rohrendes 2a eingreift. Zwischen seinen Enden ist der Riegel 6 in Nuten 1d des Rohrendes 1a eingesetzt, so dass der Riegel die beiden Enden 1a und 2a formschlüssig miteinander verbindet. Vorzugsweise sind gemäss Fig. 4 und 2 mehrere solche Nuten 1d vorgesehen, so dass auch nach einer Ablängung des Endes 1a solche Nuten 1d zur Verfügung stehen.

Um die Verbindung herzustellen, müssen somit lediglich die beiden Rohre 1 und 2 zusammengesteckt und der Riegel 6 eingeschoben werden.

## Patentansprüche

1. Verbindung von zwei Doppelrohren (1,2) aus Kunststoff, die gegeneinander abgedichtet sind, wobei die beiden verbundenen Rohrenden (1a,2a) unterschiedlich weit und zusammengesteckt sind und eine Dichtungsmanschette (5) die beiden Rohre (1,2) gegeneinander abdichtet, dadurch gekennzeichnet, dass beide Doppelrohre (1,2) einstückig ausgebildet sind und das innere Doppelrohr (1) am angeschlossenen Ende einen Zwischenraum (1c) zwischen seinen beiden Kanälen (1g,1h) aufweist, und dass die Dichtungsmanschette (5) eine Querwandung (5c) aufweist, die einerseits in den Zwischenraum (1c) zwischen den beiden Kanälen (1g,1h) des inneren Rohres (1) eingreift und andererseits dichtend eine das äussere Rohr (2) innenseitig in zwei Kanäle (2d,2e) unterteilende Wandung (2c) umgreift.

2. Verbindung nach Anspruch 1, dadurch gekennzeichnet, dass die Dichtungsmanschette (5) eine an der Innenseite des äusseren Rohrendes (2a) und der Aussenseite des inneren Rohrendes (1a) dichtend anliegende umlaufende Wandung (5b) aufweist.

3. Verbindung nach Anspruch 2, dadurch gekennzeichnet, dass die umlaufende Wandung (5b) und die Querwandung (5c) Dichtlippen (5d) aufweisen, die an der Aussenseite des inneren Rohrendes (1a) anliegen.

4. Verbindung nach einem der Ansprüche 1 bis 3, dadurch gekennzeichnet, dass zur axialen Fixierung der beiden Rohrenden (1a,2a) ein Riegel (6) zwischen die beiden getrennten Kanäle (1g,1h) des inneren Rohres (1) geschoben ist.

5. Verbindung nach Anspruch 4, dadurch gekennzeichnet, dass das äussere Rohrende (2a) zwei diagonal gegenüberliegende Laschen (2b) aufweist, in welche die Enden des Riegels (6) eingreifen.

6. Verbindung nach einem der Ansprüche 1 bis 5, dadurch gekennzeichnet, dass das äussere Rohrende (2a) zu seiner Mündung hin aussen und innen stufenförmig erweitert ist.

7. Verbindung nach einem der Ansprüche 1 bis 6, dadurch gekennzeichnet, dass die beiden Rohrenden (1a,2a) einen rechteckigen Querschnitt aufweisen.

8. Verbindung nach einem der Ansprüche 1 bis 7, dadurch gekennzeichnet, dass das eine Doppelrohr (1) ein Stutzen eines Ablaufrohres einer Ablaufgarnitur eines Sanitärapparates ist.

9. Verbindung nach Anspruch 8, dadurch gekennzeichnet, dass das andere Doppelrohr ein verdecktes Ueberlaufrohr (1) ist, das einen Steigkanal (1g) und einen Rückkanal (1h) aufweist, welche Kanäle (1g,1h) in einem horizontalen Teil (1k) und einem vertikalen Teil (1e) verlaufen und am oberen Ende des vertikalen Teils (1e) miteinander verbunden sind, wobei dieses andere Rohr eine im Innern verlaufende Trennwand (1f) aufweist, die im horizontalen Teil (1k) wenigstens am angeschlossenen Rohrende durch einen Zwischenraum (1c) geteilt ist.

## Claims

1. A connection for two double pipes (1,2) made from synthetic material, which are sealed with respect to each other, wherein the two connected pipe ends (1a, 2a) are of different widths and are assembled together and a sealing collar (5) seals the two pipes (1, 2) with respect to each other, characterised in that the double pipes (1, 2) are both formed in one piece and the internal double pipe (1) is provided at the connected end with an intermediate space (1c) between its two ducts (1g, 1h) and in that the sealing collar (5) comprises a transverse wall (5c) which engages at the one side into the intermediate space (1c) between the two ducts (1g, 1h) of the internal pipe (1) and embraces at the other side in a sealing manner a wall (2c) which subdivides the external pipe (2) at the inside into two ducts (2d, 2e).

2. A connection according to claim 1, characterised in that the sealing collar (5) comprises a circumferential wall (5b) which rests in a sealing manner against the internal side of the external pipe end (2a) and against the external side of the internal pipe end (1a).

3. A connection according to claim 2, characterised in that the circumferential wall (5b) and the transverse wall (5c) comprise sealing lips (5d), which rest against the external side of the internal pipe end (1a).

4. A connection according to one of claims 1 to 3, characterised in that for the purpose of axially fixing the two pipe ends (1a, 2a), a bar (6) is pushed between the two separate ducts (1g, 1h) of the internal pipe (1).

5. A connection according to claim 4, characterised in that the external pipe end (2a) comprises two tabs (2b) which lie diagonally opposite each other and which are engaged by the ends of the bar (6).

6. A connection according to one of claims 1 to 5, characterised in that the external pipe end (2a) enlarges in the form of outwardly and inwardly directed steps towards its mouth.

7. A connection according to one of claims 1 to 6, characterised in that the two pipe ends (1a, 2a) have a rectangular cross section.

8. A connection according to one of claims 1 to 7, characterised in that the double pipe (1) is a connection piece of a waste pipe of a waste fitting on a sanitary appliance.

9. A connection according to claim 8, characterised in that the other double pipe is a concealed overflow pipe (1), which comprises a user duct (1g) and a return duct (1h), which ducts (1g, 1h) extend in a horizontal part (1k) and a vertical part (1e) and are connected to each other at the upper end of the vertical part (1e), wherein the other pipe comprises a partition wall (1f) which extends internally and which is divided in the horizontal part (1k) at least at the adjoining pipe end by virtue of an intermediate space (1c).

## Revendications

1. Connexion de deux tuyaux doubles (1, 2) en matière plastique qui sont mutuellement étanchés, les deux extrémités de tuyau assemblées (1a, 2a) possédant des largeurs différentes et étant mutuellement emboîtées, et une garniture d'étanchéité (5) assurant l'étanchéité mutuelle des deux tuyaux (1, 2), **caractérisée** en ce que les deux tuyaux doubles (1, 2) sont chacun réalisés d'un seul tenant et le tuyau double intérieur (1) présente, à l'extrémité raccordée, un espace intermédiaire (1c) entre ses deux canaux (1g, 1h), et en ce que la garniture d'étanchéité (5) présente une paroi transversale (5c) qui, d'une part, s'engage dans l'espace intermédiaire (1c) entre les deux canaux (1g, 1h) du tuyau intérieur (1) et, d'autre part, s'engage en étanchéité autour d'une paroi (2c) divisant intérieurement le tuyau extérieur (2) en deux canaux (2d, 2e).

2. Connexion selon la revendication 1, **caractérisée** en ce que la garniture d'étanchéité (5) présente une paroi entourante (5b), qui s'applique en étanchéité contre le côté intérieur de l'extrémité (2a) du tuyau extérieur et contre le côté extérieur de l'extrémité (1a) du tuyau intérieur.

3. Connexion selon la revendication 2, **caractérisée** en ce que la paroi entourante (5b) et la paroi transversale (5c) présentent des lèvres d'étanchéité (5d), qui s'appliquent contre le côté extérieur de l'extrémité (1a) du tuyau intérieur.

4. Connexion selon l'une quelconque des revendications 1 à 3, **caractérisée** en ce que, pour la fixation axiale des deux extrémités de tuyaux (1a, 2a), un élément de verrouillage (6) est poussé entre les deux canaux séparés (1g, 1h) du tuyau intérieur (1).

5. Connexion selon la revendication 4, **caractérisée** en ce que l'extrémité (2a) du tuyau extérieur présente deux attaches diagonalement opposées (2f), dans lesquelles s'engagent les extrémités de l'élément de verrouillage (6).

6. Connexion selon l'une quelconque des revendications 1 à 5, **caractérisée** en ce que l'extrémité (2a) du tuyau extérieur est élargie extérieurement et intérieurement en gradins vers son embouchure.

7. Connexion selon l'une quelconque des revendications 1 à 6, **caractérisée** en ce que les deux extrémités de tuyaux (1a, 2a) présentent une section rectangulaire.

8. Connexion selon l'une quelconque des revendications 1 à 7, **caractérisée** en ce qu'un des tuyaux doubles (2) est un piquage d'un conduit d'évacuation d'un dispositif d'évacuation d'un appareil sanitaire.

9. Connexion selon la revendication 8, **caractérisée** en ce que l'autre tuyau double est une conduite de trop-plein cachée (1), qui présente un canal montant (1g) et un canal de retour (1h), ces canaux (1g, 1h) s'étendant dans une partie horizontale (1k) et dans une partie verticale (1e) et étant en communication à l'extrémité supérieure de la partie verticale (1e), ledit autre tuyau présentant une paroi de séparation (1f), qui s'étend à l'intérieur du tuyau et qui, dans la partie horizontale (1k), est subdivisée, au moins à l'extrémité raccordée du tuyau, par un espace intermédiaire (1c).
